# EUROPÄISCHE PATENTSCHRIFT

(11) **EP 3 808 616 B1**
(45) Veröffentlichungstag und Bekanntmachung des Hinweises auf die Patenterteilung: **21.02.2024**
(21) Anmeldenummer: 20201782.8
(22) Anmeldetag: 14.10.2020
(51) Int. Cl.: B60S 3/04, G06V 20/52

(54) **KAMERABASIERTE ABSICHERUNG FÜR FAHRZEUGBEHANDLUNGSANLAGEN**
CAMERA-BASED PROTECTION FOR VEHICLE TREATMENT SYSTEMS
PROTECTION PAR CAMÉRA POUR INSTALLATIONS DE TRAITEMENT DES VÉHICULES

(30) Priorität: 15.10.2019 DE 202019105667 U
(43) Veröffentlichungstag der Anmeldung: 21.04.2021
(73) Patentinhaber: Otto Christ AG, 87734 Benningen (DE)
(72) Erfinder: Christ, Markus, 87700 Memmingen (DE)
(74) Vertreter: ERNICKE Patent- und Rechtsanwälte PartmbB

(56) Entgegenhaltungen:
- DE-U1-202013 103 562
- US-B2- 10 331 943

## Beschreibung

Die Erfindung liegt auf dem Gebiet der Fahrzeugbehandlungsanlagen. Fahrzeugbehandlungsanlagen werden zur Behandlung, insbesondere der Reinigung, Aufbereitung, Pflege, Polierung oder sonstiger Behandlung, von Fahrzeugen eingesetzt.

In unterschiedlichen Ausführungen bestehen Fahrzeugbehandlungsanlagen für Personenkraftwagen, Lastkraftwagen, Motorrädern, Fahrrädern, Bussen, Lokomotiven, Wagons, Straßenbahnen oder sonstigen Fahrzeugen.

Eine besonders häufige Ausführung sind PKW-Waschanlagen. Häufig sind Fahrzeugbehandlungsanlagen als Portalbehandlungsanlagen oder Behandlungsstraßen ausgebildet.

In einer Fahrzeugbehandlungsanlage werden zur Behandlung eines Fahrzeugs in der Regel bewegte Behandlungsvorrichtungen (z.B. Waschbürsten) und Chemikalien (z.B. Waschlaugen) eingesetzt. Während des Betriebs der Fahrzeugbehandlungsanlage können diese Behandlungsvorrichtungen und Chemikalien eine Gefahr für Personen im oder am Behandlungsbereich der Fahrzeugbehandlungsanlage darstellen. Eine weitere Gefahr besteht, wenn z.B. eine Person während der Behandlung ihres Fahrzeugs versucht aus dem Fahrzeug auszusteigen. Bei geöffneten Fenstern oder Türen können Flüssigkeiten in das Fahrzeug eindringen. Bei unsachgemäßem Gebrauch drohen außerdem Schäden an der Fahrzeugbehandlungsanlage oder dem Fahrzeug.

Der Betrieb einer Fahrzeugbehandlungsanlage erfordert daher geeignete Sicherungsmaßnahmen.

Zur Absicherung von Fahrzeugbehandlungsanlagen werden in der Praxis geschultes Personal oder Sicherheitsvorrichtungen eingesetzt. Häufig ist die Fahrzeugbehandlungsanlage in einer Halle mit verschließbaren Toren angeordnet. Ebenfalls bekannt sind Fahrzeugbehandlungsanlagen mit Lichtschranken.

WO 03/070531 A1 offenbart eine Überwachungsvorrichtung zur Begehungssicherung einer Fahrzeugwaschanlage ähnlich der im Oberbegriff von Anspruch 1 definierten Vorrichtung.

Aus DE 20 2013 103 562 U1 ist eine Portalwaschanlage mit einer Einfahrhilfe bekannt, bei der mit einer Positionsbestimmungseinrichtung die Position eines Fahrzeugs während der Einfahrt bestimmt wird und dem Fahrer auf einer Anzeigevorrichtung ein entsprechendes Positionssignal zur Anzeige gebracht wird. Die Positionsbestimmungseinrichtung kann eine Entfernungsmesseinrichtung mit einer Kamera umfassen. Mit der Einfahrhilfe wird eine für den Fahrer einfache, schnelle und dennoch genaue Positionierung des Fahrzeugs ermöglicht.

Aufgabe der vorliegenden Erfindung ist es, eine verbesserte Absicherung für Fahrzeugbehandlungsanlagen bereitzustellen.

Es wird eine Überwachungsvorrichtung für eine Fahrzeugbehandlungsanlage offenbart. Die Überwachungsvorrichtung ist zur Begehungssicherung von Fahrzeugbehandlungsanlagen ausgebildet. Die Überwachungsvorrichtung ist besonders für Fahrzeugwaschanlagen, insbesondere für PKW, geeignet. Die Überwachungsvorrichtung umfasst mindestens eine Kamera und eine Bildverarbeitungseinheit.

Bei der Kamera handelt es sich bevorzugt um eine für den industriellen Betrieb geeignete Kamera. Bevorzugt werden Mono-Kameras eingesetzt. Eine Kamera umfasst in der Regel ein Objektiv, einen Lichtsensor, eine elektronische Datenverarbeitungseinheit und eine Datenschnittstelle. Bevorzugt wird eine Kamera für Bewegtbilder des sichtbaren Lichts eingesetzt. Es kann sowohl ein Farb- als auch eine Schwarzweiß-Kamera eingesetzt werden. Alternativ oder zusätzlich können auch Stereo-Kameras, Kameras für andere Spektralbereiche des Lichts (z.B. Infrarot) oder Time-of-Flight-Kameras eingesetzt werden. Als Kamera wird bevorzugt eine Kamera eingesetzt, die gegen Umwelteinflüsse (z.B. Feuchtigkeit, Wasser, Chemikalien, Staub) besonders geschützt ist.

Die Kamera erfasst Aufnahmen (z.B. einzelne Bilder, eine Folge von Bildern oder einen Video-Stream) von einem Erfassungsbereich. Die Aufnahmen liegen bevorzugt als vorverarbeitete, digitale Daten vor. Die Aufnahmen können über eine Datenschnittstelle (z.B. Bussysteme, USB, Ethernet, Bluetooth, WLAN) übertragen werden. Die Aufnahmen können neben den eigentlichen Bildinformationen (z.B. Pixeldaten) auch Metadaten umfassen (z.B. Aufnahmezeitpunkt, Informationen zum Erfassungsbereich, Nummer der Kamera, Verschlüsselungsinformationen). Die Kamera ist bevorzugt derart angeordnet, dass ein bestimmter Erfassungsbereich an der Fahrzeugbehandlungsanlage in den Aufnahmen der Kamera erfasst ist.

Mehrere Kameras können auf denselben oder unterschiedliche Erfassungsbereiche gerichtet sein. Die unterschiedlichen Erfassungsbereiche können sich überschneiden oder voneinander getrennt sein. Es kann beispielsweise eine erste Kamera auf einen Erfassungsbereich in der Einfahrt und eine zweite Kamera auf einen Erfassungsbereich in der Ausfahrt einer Waschanlage gerichtet sein.

Der Erfassungsbereich liegt an der Fahrzeugbehandlungsanlage, d.h. der Erfassungsbereich kann insbesondere innerhalb der Fahrzeugbehandlungsanlage oder auch außerhalb oder an einem Randbereich der Fahrzeugbehandlungsanlage liegen. Die Kamera ist derart an der Fahrzeugbehandlungsanlage angeordnet oder anordbar, dass der Erfassungsbereich in den Aufnahmen der Kamera umfasst ist. Bevorzugt liegt mindestens ein Erfassungsbereich an einer Einfahrt, einer Ausfahrt und/oder im Behandlungsbereich (z.B. im Bereich bewegter Bürsten o.ä.) der Fahrzeugbehandlungsanlage.

Die Bildverarbeitungseinheit ist dazu ausgebildet Aufnahmen mindestens einer Kamera zu verarbeiten. Die Aufnahmen werden bevorzugt als digitale Daten von einer oder mehreren Kameras über ein Datennetzwerk (oder eine Datenleitung) an die Bildverarbeitungseinheit übertragen. Die Bildverarbeitungseinheit umfasst eine elektronische Datenverarbeitungseinheit. Die Bildverarbeitungseinheit kann sowohl in eine Kamera integriert sein, als auch als separate Komponente ausgebildet sein. Die Bildverarbeitungseinheit kann auch als Software-Komponente auf einer mit anderen Software-Komponenten genutzten Hardware ausgebildet sein. Bevorzugt ist die Bildverarbeitungseinheit in ein Zentralsteuergerät (z.B. eine Anlagensteuerung) integriert, das mit der Fahrzeugbehandlungsanlage verbunden ist.

Die Bildverarbeitungseinheit empfängt Daten von mindestens einer der Kameras. Die Datenübertragung kann über ein Datennetzwerk oder einzelne Datenleitungen erfolgen. Bevorzugt umfasst die Überwachungsvorrichtung ein kabelgebundenes oder kabelloses Datennetzwerk, das zur Übertragung von Bildinformationen geeignet ist. Hierfür sind insbesondere echtzeitfähige Multimedia-Bussysteme geeignet. Die Datenübertragung kann zumindest teilweise auch über das Internet erfolgen.

Die Daten können entweder vorverarbeitet oder als Rohdaten an die Bildverarbeitungseinheit übertragen werden. Die Kamera und die Bildverarbeitungseinheit können in einer gemeinsamen Vorrichtung integriert sein oder als separate Einheiten ausgeführt sein. Bevorzugt werden die Rohdaten der Kamera in der Kamera vorverarbeitet (z.B. gefiltert oder komprimiert) und in vorverarbeiteter Form an die Bildverarbeitungseinheit übertragen.

Die Bildverarbeitungseinheit ist dazu ausgebildet (vorverarbeitete) Aufnahmen der Kamera(s) zu verarbeiten. Die Bildverarbeitungseinheit umfasst dazu ein oder mehrere Soft- und/oder Hardwarekomponenten, die speziell für die Verarbeitung von digitalen Bildern in Echtzeit ausgebildet sind. Bevorzugt umfasst die Bildverarbeitungseinheit mindestens einen Grafikprozessor und/oder Grafikspeicher. Die Softwarekomponenten können jeweils einen von mehreren geeigneten Verarbeitungsschritten durchführen. Die Bildverarbeitungseinheit kann dazu ausgebildet sein, die Daten von mehreren Kameras zu fusionieren und gemeinsam zu verarbeiten. Die Bildverarbeitungseinheit ist bevorzugt dazu ausgebildet mehrere Bilddatensätze parallel zu verarbeiten. Die Bildverarbeitungseinheit ist insbesondere dazu ausgebildet eine zeitliche Abfolge von Aufnahmen zu verarbeiten, wobei neben den Bildinformationen auch die Veränderung zwischen den zeitlich aufeinander folgenden Bildern verarbeitet wird.

Die Bildverarbeitungseinheit kann insbesondere ein verteiltes System umfassen, das auf mehrere elektronische Datenverarbeitungseinheiten verteilt ist. Teile der Bildverarbeitungseinheit können auch entfernt von der Fahrzeugbehandlungsanlage (z.B. auf einem Server, in der Cloud) implementiert sein. Besonders aufwendige Bildverarbeitungsschritte werden bevorzugt auf zentralen Servern mit hoher Leistung durchgeführt. Ein zentraler Server kann für mehrere Fahrzeugbehandlungsanlagen an verschiedenen Orten Bildverarbeitungsschritte durchführen. Diese Offenbarung umfasst sowohl eine lokale Architektur als auch eine verteilte Cloud-Architektur.

Bei einer lokalen Architektur sind die elektronischen Datenverarbeitungseinheiten der Überwachungsvorrichtung lokal an einer Fahrzeugbehandlungsanlage oder einer Gruppe von Fahrzeugbehandlungsanlagen angeordnet. Die Datenübertragung findet bevorzugt über relativ kurze Wege (1m bis 100m) in einem lokalen Netzwerk statt.

Bei einer verteilten (Cloud-)Architektur können Teile der Überwachungsvorrichtung auch weit entfernt von der Fahrzeugbehandlungsanlage liegen. Die Datenübertragung findet hier bevorzugt über das Internet statt. Die Überwachungsvorrichtung bildet auch bei einer verteilten Architektur ein zusammenhängendes System. Die Hardware-Komponenten (elektronische Datenverarbeitungseinheiten, Server) einer Überwachungsvorrichtung können an verschiedenen Orten verteilt sein.

Die Bildverarbeitungseinheit umfasst eine Anlagenschnittstelle. Über die Anlagenschnittstelle können Daten mit einer Fahrzeugbehandlungsanlage ausgetauscht werden. Die Anlagenschnittstelle ist bevorzugt dazu ausgebildet sowohl Daten von einer Fahrzeugbehandlungsanlage zu empfangen als auch Daten an eine Fahrzeugbehandlungsanlage zu senden. Die Anlagenschnittstelle kann als Hardware- oder Softwarekomponente ausgebildet sein. Die Anlagenschnittstelle kann insbesondere als Software implementiert sein, wenn Teile der Überwachungsvorrichtung in die Fahrzeugbehandlungsanlage integriert sind, insbesondere wenn die Bildverarbeitungseinrichtung in die Anlagensteuerung integriert ist.

Über die Anlagenschnittstelle sind insbesondere vordefinierte Signale (z.B. Datenpakete) austauschbar. Ein Signal kann insbesondere Anweisungen umfassen (z.B. eine Nothalt-Anweisung). Die Fahrzeugbehandlungsanlage ist bevorzugt derart eingerichtet, dass Signale von einer Überwachungsvorrichtung laufend überwacht werden. Die Überwachungsvorrichtung kann über die Anlagenschnittstelle bestimmte Funktionen der Fahrzeugbehandlungsanlage steuern bzw. auslösen. Die Überwachungsvorrichtung kann bevorzugt auch Zustandsdaten einer oder mehrerer Fahrzeugbehandlungsanlagen über eine Anlagenschnittstelle empfangen. So kann die Überwachungsvorrichtung auf den aktuellen Betriebszustand (z.B. Waschmodus, Wartungsmodus, Ein- oder Ausfahrt eines Fahrzeugs) der Fahrzeugbehandlungsanlage reagieren. Die Anlagenschnittstelle kann an ein gemeinsames Datenübertragungsnetzwerk mit Komponenten einer oder mehrerer Fahrzeugbehandlungsanlagen angeschlossen sein. Die Anlagenschnittstelle kann insbesondere ein Bussystem umfassen.

Die Überwachungsvorrichtung ist dazu ausgebildet, Objekte und/oder Ereignisse in einem Erfassungsbereich zu erkennen. Ein Objekt oder ein Ereignis ist bevorzugt ein charakteristischer Datensatz, insbesondere in einer Aufnahme einer Kamera. Das Objekt ist ein Datensatz, der ein reales Objekt (z.B. eine Person, ein Fahrzeug, ein Hund oder ein Teil der Fahrzeugbehandlungsanlage) repräsentieren kann. Die Kamera dient als Sensor für die Erkennung von Objekten oder Ereignissen. Die Erkennung erfolgt durch Analyse der von der Kamera erzeugten Daten. Gegebenenfalls werden zur Erkennung auch zusätzliche Daten (z.B. Zustandsdaten der Fahrzeugbehandlungsanlage, Benutzereingaben oder Wetterdaten) verarbeitet.

Ein Ereignis wird von der Überwachungsvorrichtung als ein charakteristischer Datensatz erkannt, der eine reale Situation repräsentiert. Ein Ereignis beschreibt häufig eine zeitliche Veränderung eines oder mehrerer Objekte. Ein Ereignis kann beispielsweise die Annäherung einer Person an einen Gefahrenbereich oder das Öffnen einer Fahrzeugtür repräsentieren. Ein erkanntes Ereignis basiert bevorzugt auf einer szenenartigen Interpretation von Datensätzen, insbesondere einer zeitlichen Abfolge von Kameraaufnahmen.

Für die Erkennung von Objekten oder Ereignissen stehen dem Fachmann unterschiedliche Verfahren und Vorrichtungen zur Verfügung. In der Überwachungsvorrichtung kann insbesondere ein maschinell trainiertes Erkennungssystem (z.B. ein künstliches neuronales Netz oder eine Support Vector Machine) implementiert sein. Die Überwachungsvorrichtung kann mehrere Erkennungssysteme umfassen, die unterschiedliche (Teil-)Aufgaben der Erkennung übernehmen. Zum Beispiel kann ein erstes Erkennungssystem Objekte, z.B. Personen, in einer Aufnahme erkennen. Ein weiteres Erkennungssystem kann die Position eines Objekts bestimmten. Dabei werden ggfs. Informationen über die Anordnung der Kamera oder die Fahrzeugbehandlungsanlage verarbeitet. Die Erkennung eines Objekts kann auch die Erkennung dessen Verhalten oder dessen Position umfassen. Bei der Erkennung eines Objekts oder eines Ereignisses kann auch eine Prognose über das zukünftige Verhalten eines Objekts stattfinden. Dem Fachmann sind Erkennungssysteme bekannt, mit denen sich z.B. die Bewegungsintention einer Person prognostizieren lässt.

Die Überwachungsvorrichtung ist insbesondere dazu ausgebildet, Veränderungen an Objekten zu erkennen. Ein erkanntes Objekt kann von der Überwachungsvorrichtung verfolgt werden. Dem Fachmann stehen hierfür entsprechende Erkennungssysteme (z.B. Kalmanfilter) zur Verfügung. Eine Veränderung eines Objekts kann beispielsweise darin bestehen, dass sich die Türe eines Fahrzeugs öffnet. Bei der Erkennung kann insbesondere die Position und/oder die Außenkontur eines Objekts berücksichtigt werden.

Bei der Erkennung eines Objekts, insbesondere einer Person, kann die Position und/oder die Bewegung des Objekts ermittelt werden. Die Überwachungsvorrichtung umfasst vorzugsweise eine entsprechende Lokalisierungseinheit. Die Position eines Objekts kann bspw. in Bildkoordinaten eines Kamerabilds und/oder in Weltkoordinaten der Fahrzeugbehandlungsanlage bestimmt werden.

Durch die Erkennung eines Objekts und/oder eines Ereignisses kann ein Gefahrenzustand erkannt werden. Ein Gefahrenzustand kann insbesondere bestehen, wenn eine Person sich dem Behandlungsbereich der Fahrzeugbehandlungsanlage nähert oder sich die Fahrzeugtür eines Fahrzeugs während der Behandlung öffnet.

Die Überwachungsvorrichtung ist dazu ausgebildet eine Sicherheitsaktion einer Fahrzeugbehandlungsanlage auszulösen. Bevorzugt wird die Sicherheitsaktion im Falle eines Gefahrenzustands ausgelöst. Die Sicherheitsaktion kann eine Aktion der Überwachungsvorrichtung oder der Fahrzeugbehandlungsanlage sein. Die Sicherheitsaktion kann eine Ansteuerung der Fahrzeugbehandlungsanlage (z.B. ein Nothalt, eine Unterbrechung von Flüssigkeitsströmen, ein Zurückfahren von Bürsten o.ä.) umfassen. Alternativ oder zusätzlich kann die Sicherheitsaktion zusätzliche Sicherheitsmittel (z.B. Schranken, Tore, Sirenen, Lautsprecher) einsetzen. Die Sicherheitsaktion wird ausgelöst, wenn ein vorbestimmtes Objekt und/oder ein vorbestimmtes Ereignis erkannt wird, insbesondere wenn ein Objekt in einem bestimmten Bereich der Fahrzeugbehandlungsanlage erkannt wird. Bevorzugt wird beim Eintritt einer Person in einen Gefahrenbereich oder dem Öffnen einer Fahrzeugtür innerhalb eines Gefahrenbereichs ein Nothalt der Fahrzeugbehandlungsanlage ausgelöst.

Ein wesentlicher Aspekt der Erfindung ist die Eignung der Überwachungsvorrichtung für den sicherheitsrelevanten Einsatz. Die Überwachungsvorrichtung ist dazu geeignet, Sicherheitsaktionen zur Sicherheit von Personen und/oder Gegenständen auszulösen. Die Überwachungsvorrichtung erfüllt bevorzugt vorgegebene Echtzeitanforderungen. Bevorzugt ist die Überwachungsvorrichtung gegen einen Software- oder einen Hardwareausfall abgesichert. Die Überwachungsvorrichtung ist bevorzugt in eine Sicherheitsarchitektur zum Schutz von Personen während des Betriebs einer Fahrzeugbehandlungsanlage integrierbar.

Bevorzugt werden Sicherheitsaktionen durch die Überwachungsvorrichtung in Kooperation mit einer Fahrzeugbehandlungsanlage ausgelöst. Wird beispielsweise ein Mensch in einem Gefahrenbereich im Erfassungsbereich einer Kamera erkannt, kann ein Sicherheitssignal an eine Fahrzeugbehandlungsanlage gesendet werden. Auf Basis eines solchen Sicherheitssignals kann auch die Anlagensteuerung eine geeignete Sicherheitsaktion auslösen, z.B. ein Not-Halt der Fahrzeugbehandlungsanlage. Die Sicherheitsaktion kann durch die Überwachungsvorrichtung, die Fahrzeugbehandlungsanlage oder eine andere Vorrichtung ausgeführt werden. Das Auslösen einer Sicherheitsaktion kann das Senden eines Sicherheitssignals (z.B. ein Auslöse-Befehl über eine Anlagenschnittstelle) umfassen. Alternativ oder zusätzlich kann die Überwachungsvorrichtung selbst eine Sicherheitsaktion ausführen.

Die Sicherheitsaktion kann insbesondere darin bestehen, dass die Fahrzeugbehandlungsanlage in einen bestimmten Betriebsmodus wechselt. Insbesondere kann von einem normalen Betriebsmodus (bspw. ein Waschprogramm) in einen Sonderbetriebsmodus (z.B. langsame oder kraftreduzierte Sicherheitsfahrt) oder umgekehrt gewechselt werden. Durch die ausgelöste Sicherheitsaktion kann sowohl in einen sicheren Betriebsmodus und/oder zurück in einen normalen Modus gewechselt werden. Alternativ oder zusätzlich kann ein mehrstufiges Sicherheitskonzept mit eskalierenden Sicherheitsaktionen angewendet werden (z.B. zuerst ein Warnton, dann langsame Sicherheitsfahrt, schließlich Not-Halt).

### Zeichnungsbeschreibung

Die Erfindung ist in den Zeichnungen beispielhaft und schematisch dargestellt. Es zeigen:
- Figur 1:: eine Fahrzeugbehandlungsanlage (100) mit einer Überwachungsvorrichtung (200) mit einer Kamera (201) in einer perspektivischen Darstellung;
- Figur 2:: eine Ausführungsform zur Erkennung einer geöffneten Fahrzeugtüre (FT) in einer Fahrzeugbehandlungsanlage;
- Figur 3:: eine Ausführungsform mit einer Online-Schnittstelle (252) zu einer entfernten Erkennungsvorrichtung (290) und einer Anlagenschnittstelle (251) zu einer separaten Anlagensteuerung (120);

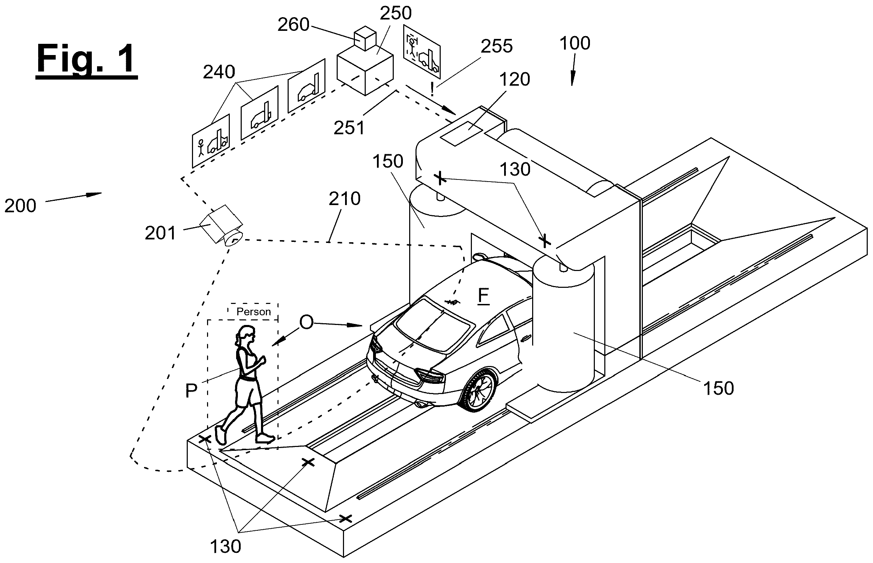

Figur 1 zeigt schematisch eine Überwachungsvorrichtung (200) mit einer Kamera (201). Die Kamera (201) nimmt Bilder eines Erfassungsbereichs (210) auf. In dieser einfachen Ausführungsform umfasst die Überwachungsvorrichtung (200) nur eine Kamera (201). Bevorzugt umfasst die Überwachungsvorrichtung (200) mehrere Kameras (201), die jeweils einen separaten Erfassungsbereich (210) abdecken.

Der Erfassungsbereich (210) deckt in dieser Ausführungsform den Einfahrtsbereich einer Fahrzeugbehandlungsanlage (100) ab. Die Aufnahmen (240) der Kamera (201) werden an eine Bildverarbeitungseinheit (250) der Überwachungsvorrichtung (200) übertragen. Die Bilddaten (240) werden in der Bildverarbeitungseinheit (250) verarbeitet, um Objekte (O) im Erfassungsbereich (210) der Kamera (201) zu erkennen.

Die Bildverarbeitungseinheit (250) umfasst bevorzugt einen Klassifikator (260). Der Klassifikator (260) ist dazu ausgebildet, Objekte (O) in den Bilddaten (240) zu klassifizieren. Bei der Klassifikation werden erkannte Objekte bevorzugt in vorgegebene Klassen eingeteilt. Vorgegebene Klassen können beispielsweise Personen, Fahrzeuge, Tiere und/oder Teile der Fahrzeugbehandlungsanlage sein.

Der Klassifikator (260) ist bevorzugt als Softwaremodul ausgebildet. Als Klassifikatoren kommen insbesondere Support Vector Machines oder künstliche neuronale Netze in Betracht. Es können auch andere geeignete Klassifikatoren eingesetzt werden.

Wenn ein Objekt (O) in einem Erfassungsbereich (210) erkannt wird, wird bevorzugt auch die Position des Objekts festgestellt. Das Objekt wird hierzu lokalisiert. Zur Lokalisierung werden bevorzugt geeignete Kamerasysteme (201) eingesetzt. Beispielsweise können Stereokameras eingesetzt werden. Die Positionsbestimmung kann insbesondere in Bezug auf eine Kamera (201) oder die Fahrzeugbehandlungsanlage (100) oder einen Gefahrenbereich erfolgen. Bevorzugt sind die Kameras (201) an vorgegebenen Positionen in Bezug auf die Fahrzeugbehandlungsanlage (100) angeordnet. Alternativ oder zusätzlich kann die Kameraanordnung durch die Überwachungsvorrichtung (200) kalibriert werden. Insbesondere kann die Anordnung der Kamera (201) durch Erfassung von Markern (130) bestimmt werden.

Die Erkennung von Objekten und/oder die Klassifizierung von Objekten kann im gesamten Erfassungsbereich (210) einer Kamera oder nur einem Teil des Erfassungsbereichs erfolgen. Der Erfassungsbereich (210) kann insbesondere auf einen bestimmten Bereich an oder in der Fahrzeugbehandlungsanlage (100) gerichtet sein.

In einer einfachen Ausführungsform stellt der gesamte Erfassungsbereich (210) einer Kamera (201) auch einen Gefahrenbereich der Fahrzeugbehandlungsanlage (100) dar. In einem Gefahrenbereich bestehen Gefahren für Personen oder Fahrzeuge. Die Überwachungsvorrichtung (200) kann dazu ausgebildet sein eine Sicherheitsaktion auszulösen, sobald eine Person (P) im Erfassungsbereich (210) erkannt wird.

Bevorzugt wird die Sicherheitsaktion durch Erzeugung eines Auslösesignals (255) ausgelöst. Die Überwachungsvorrichtung umfasst bevorzugt eine Anlagenschnittstelle (251). Über die Anlagenschnittstelle (251) sind Daten und/oder Signale mit einer Fahrzeugbehandlungsanlage (100), insbesondere einer Anlagensteuerung (120), austauschbar.

Die Fahrzeugbehandlungsanlage (100) ist bevorzugt dazu ausgebildet, Signale und/oder Daten von einer Überwachungsvorrichtung (200) zu empfangen und zu verarbeiten. Insbesondere ist die Fahrzeugbehandlungsanlage dazu ausgebildet, eine Sicherheitsaktion auf Basis eines Signals (255) einer Überwachungsvorrichtung (200) auszuführen.

Die Sicherheitsaktion besteht bevorzugt in einem Not-Halt der Fahrzeugbehandlungsanlage (100). Die Fahrzeugbehandlungsanlage (100) ist bevorzugt dazu ausgebildet, Behandlungsmittel (150), z.B. Bürsten oder andere Behandlungsgeräte, zu stoppen und/oder in eine sichere Position zu fahren. Bei einer Sicherheitsaktion können eine oder mehrere Sicherheitsmaßnahmen durchgeführt werden.

Die Überwachungsvorrichtung (200) ist bevorzugt dazu ausgebildet in Abhängigkeit des erkannten Objekts (O) oder eines erkannten Ereignisses eine bestimmte Sicherheitsaktion auszulösen. Es kann insbesondere ein mehrstufiges Sicherheitskonzept implementiert sein. Bevorzugt wird beim Annähern einer Person (P) an einen Gefahrenbereich eine erste Sicherheitskation, z.B. ein akustisches Warnsignal, ausgelöst. Beim tatsächlichen Eintreten einer Person in einen Gefahrenbereich wird eine weitere Sicherheitsaktion, z.B. ein Not-Halt, ausgelöst.

Die Überwachungsvorrichtung (200) ist in der in Figur 1 gezeigten Ausführungsform als separate Vorrichtung ausgebildet. Eine oder mehrere Komponenten der Überwachungsvorrichtung (200) können auch in eine Fahrzeugbehandlungsanlage (100) integriert sein. Vorteilhafterweise kann die Überwachungsvorrichtung auch als Nachrüstkomponente für bestehende Fahrzeugbehandlungsanlagen (100) ausgebildet sein.

In einer besonders vorteilhaften Ausführungsform ist die Überwachungsvorrichtung (200) dazu ausgebildet speziell Personen (P) zu erkennen. Das Erkennen von Personen kann insbesondere das Erfassen eines Objektes, die Klassifikation des Objektes und die Lokalisierung des Objektes umfassen. Die Überwachungsvorrichtung umfasst hierfür eine oder mehrere geeignete Datenverarbeitungsvorrichtungen. In einer besonders vorteilhaften Ausführungsform ist die Bildverarbeitungseinheit (250) dazu ausgebildet, eine Bewegung eines Objekts (O), insbesondere einer Person (P), zu erkennen. Die Bildverarbeitungseinheit (250) umfasst bevorzugt ein Tracking-Modul. Durch Tracking können Objekte (O) über mehrere Bildaufnahmen im Zeitverlauf verfolgt werden. Dabei wird die Position des Objekts laufend bestimmt. Die Positionsbestimmung kann sowohl auf Bilddaten (240), d.h. Sensordaten, als auch Modelannahmen basieren.

In einer weiteren Ausführungsform umfasst die Überwachungsvorrichtung (200) oder die Fahrzeugbehandlungsanlage (100) Sicherheitsmittel zur Ausführung einer Sicherheitsaktion. Bevorzugt umfassen die Sicherheitsmittel einen Lautsprecher und/oder eine optische Anzeige.

Bevorzugt ist die Überwachungsvorrichtung (200) dazu ausgebildet, einen Gefahrenzustand zu erkennen. Die Überwachungsvorrichtung umfasst bevorzugt einen Zustandsautomaten. Der Zustandsautomat kann einen oder mehrere vorbestimmte Zustände aufweisen. Die Überwachungsvorrichtung kann zwischen einem sicheren und einem Gefahrenzustand wechseln. Ein Gefahrenzustand kann insbesondere durch Erkennen einer Person in einem Gefahrenbereich ausgelöst werden. Vorteilhafterweise ist die Überwachungsvorrichtung dazu ausgebildet von einem Gefahrenzustand wieder zurück in einen sicheren Zustand zu wechseln. Dabei kann beispielsweise der Betrieb der Fahrzeugbehandlungsanlage (100) nach einem Not-Halt wieder aufgenommen werden. Der Wechsel von einem Zustand in einen anderen Zustand kann automatisiert oder nach Freigabe durch einen Benutzer erfolgen. Bevorzugt ist die Überwachungsvorrichtung hierzu fernsteuerbar.

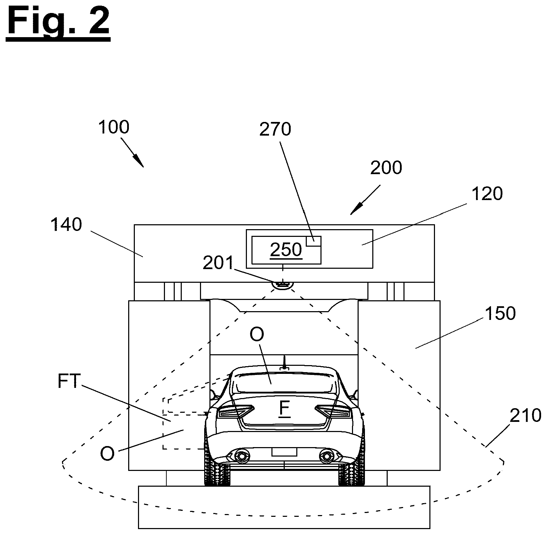

Figur 2 zeigt eine weitere Ausführungsform einer Fahrzeugbehandlungsanlage (100) mit einer Überwachungsvorrichtung (200). Die Kamera (201) ist in ein Behandlungsportal (140) der Fahrzeugbehandlungsanlage (100) integriert. Der Erfassungsbereich (210) der Kamera (201) umfasst einen Behandlungsbereich innerhalb der Fahrzeugbehandlungsanlage (100).

Die Überwachungsvorrichtung ist in dieser besonders vorteilhaften Ausführungsform dazu ausgebildet, Ereignisse im Erfassungsbereich (210) einer Kamera (201) zu erkennen.

Ein Ereignis kann insbesondere mit einem erkannten Objekt (O) verknüpfbar sein. Ein Ereignis umfasst bevorzugt eine zeitliche Veränderung eines erkannten Objekts (O).

Die Überwachungsvorrichtung (200) ist bevorzugt dazu ausgebildet das Öffnen einer Fahrzeugtüre (FT) eines Fahrzeugs (F) in einer Fahrzeugbehandlungsanlage (100) zu erkennen.

Eine oder mehrere Kameras (201) sind bevorzugt derart an einer Fahrzeugbehandlungsanlage (100) angeordnet, dass der Bereich der Fahrzeugtüren während der Behandlung eines Fahrzeugs (F) im Erfassungsbereich (210) der Kamera (201) liegt. Bevorzugt werden mehrere Kameras (201) mit überlappenden Erfassungsbereichen (210) eingesetzt. Diese Ausführungsform ist besonders vorteilhaft, um Verdeckungen bestimmter Bereiche durch Behandlungsmittel (150) durch unterschiedliche Perspektiven der Kameras (201) zu verhindern.

Die Überwachungsvorrichtung (200) umfasst bevorzugt ein Situationsmodul (270). Das Situationsmodul ist dazu ausgebildet, Situationen, d.h. Szenen, zu interpretieren. Das Situationsmodul verarbeitet Bilddaten einer oder mehrerer Kameras (201). Bevorzugt werden zeitliche Abfolgen von Aufnahmen der Kameras (201) verarbeitet. Die Erkennung eines Ereignisses kann durch das Situationsmodul erfolgen. Das Situationsmodul (270) umfasst bevorzugt ein maschinell trainierbares System, z.B. ein künstliches neuronales Netz.

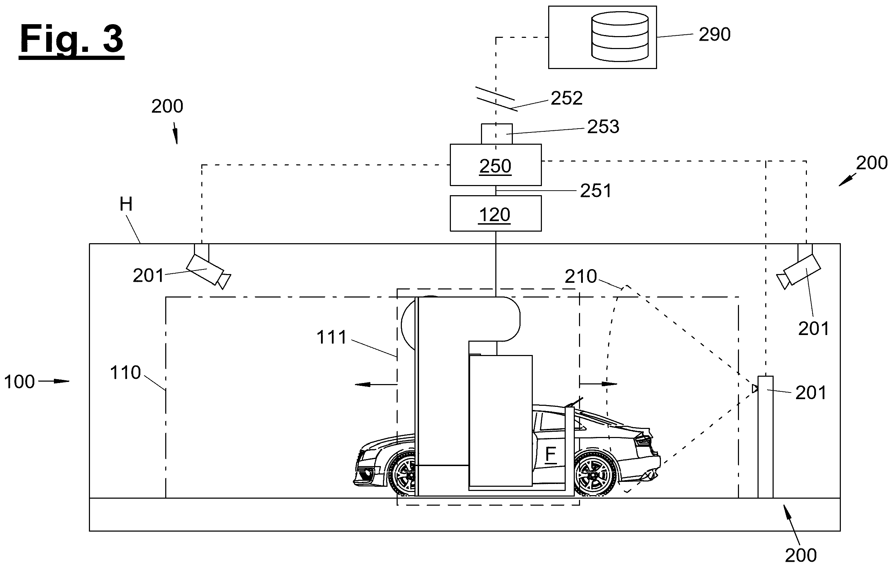

Figur 3 zeigt eine weitere Ausführungsform einer Überwachungsvorrichtung (200). Die Überwachungsvorrichtung (200) umfasst mehrere Kameras (201). Außerdem umfasst die Überwachungsvorrichtung eine Telekommunikationseinheit (253). Die Telekommunikationseinheit kann insbesondere ein Mobilfunkmodem oder einen kabelgebundenen Internetanschluss umfassen. Die Überwachungsvorrichtung umfasst eine Online-Schnittstelle (252). Die Online-Schnittstelle (252) ist bevorzugt mit einer entfernten Erkennungsvorrichtung (290) verbindbar.

Die Überwachungsvorrichtung kann über die Online-Schnittstelle (252) Daten mit entfernten Datenverarbeitungseinheiten oder Servern austauschen. Durch die Online-Schnittstelle können Teile der Bildverarbeitung auf unterschiedlichen Vorrichtungen durchgeführt werden. Besonders vorteilhaft ist die Ausführung von rechenintensiven Verarbeitungsschritten auf Servern, die über das Internet erreichbar sind.

Diese Ausführungsform hat den besonderen Vorteil, dass aufwendige Hardware für mehrere Fahrzeugbehandlungsanlagen bzw. Überwachungsvorrichtungen verwendet werden kann.

Die Überwachungsvorrichtung (200) ist bevorzugt über eine Online-Schnittstelle (252) über das Internet wartbar. Insbesondere können Softwareaktualisierungen über das Internet vorgenommen werden.

Eine Überwachungsvorrichtung (200) kann auch für mehrere Fahrzeugbehandlungsanlagen (100) eingesetzt werden. Mehrere Fahrzeugbehandlungsanlagen (100) können jeweils eine eigene Anlagensteuerung (120) umfassen. Eine zentrale Anlagensteuerung (120) kann auch mehrere Fahrzeugbehandlungsanlagen (100) ansteuern.

In einer weiteren Ausführungsform ist die Überwachungsvorrichtung (200) dazu ausgebildet einen oder mehrere Gefahrenbereiche (110,111) zu bestimmen. Es ist ein statischer Gefahrenbereich (110) und/oder ein dynamischer Gefahrenbereich (111) bestimmbar. Die Bestimmung eines dynamischen Gefahrenbereichs (111) ist besonders für Fahrzeugbehandlungsanlagen (100) geeignet, bei denen Teile der Fahrzeugbehandlungsanlage um ein stehendes Fahrzeug (F) herumbewegt werden. Der dynamische Gefahrenbereich (111) wird bevorzugt um bewegbare Teile der Fahrzeugbehandlungsanlage (100) bestimmt. Der dynamische Gefahrenbereich (111) kann sich während des Betriebs der Fahrzeugbehandlungsanlage verschieben.

Bevorzugt werden Teile der Fahrzeugbehandlungsanlage (110), z.B. bewegte Behandlungsmittel (150), von der Überwachungsvorrichtung (200) als Objekte erkannt. Durch eine Lokalisierung gefährlicher Behandlungsmittel kann ein Gefahrenbereich dynamisch bestimmt werden.

Besonders vorteilhaft ist die Bestimmung von mehreren Gefahrenbereichen. Beispielsweise kann eine erste Sicherheitsaktion bei Eintritt einer Person in einen ersten Gefahrenbereich ausgelöst werden. Beim Betreten einer Person in einen zweiten Gefahrenbereich kann eine zweite, insbesondere schärfere, Sicherheitsaktion ausgelöst werden.

In einer bevorzugten Ausführungsform wird eine Person bei Annäherung an einen Gefahrenbereich zuerst mit einer ersten Sicherheitsaktion, z.B. einer akustischen Warnung, gewarnt. Erst bei Eintritt in einen zweiten Gefahrenbereich wird ein Not-Halt der Fahrzeugbehandlungsanlage ausgelöst.

In der in Figur 3 gezeigten Ausführungsform werden unterschiedliche Arten von Kameras (201) eingesetzt. Eine oder mehrere Kameras (201) können wie gezeigt an einer die Fahrzeugbehandlungsanlage umgebenden Halle (H) angeordnet sein. Eine oder mehrere weitere Kameras können an einem Pfosten (220) angeordnet sein. Die Überwachungsvorrichtung (200) kann einen oder mehrere Pfosten zur Nachrüstung umfassen.

Die Bilddaten mehrerer Kameras (201) können insbesondere in einer Bildverarbeitungseinheit (250) fusioniert werden. Alternativ oder zusätzlich kann die Bildverarbeitungseinheit (250) in eine Kamera (201) integriert sein.

Der Gefahrenbereich (110) kann vorbestimmt sein oder während des Betriebs der Überwachungsvorrichtung online bestimmt werden.

Insbesondere kann der Gefahrenbereich auch während einer Einrichtungsphase der Überwachungsvorrichtung konfiguriert werden.

In einer bevorzugten Ausführungsform sind Zustandsdaten einer Fahrzeugbehandlungsanlage über eine Anlagenschnittstelle (251) mit der Überwachungsvorrichtung (200) austauschbar. Insbesondere kann die Überwachungsvorrichtung (200) Zustandsdaten der Fahrzeugbehandlungsanlagen (100) verarbeiten um auf den aktuellen Zustand der Fahrzeugbehandlungsanlage zu reagieren. Beispielsweise kann der Gefahrenbereich (111) unter Berücksichtigung der aktuellen Bewegung der Fahrzeugbehandlungsanlage. Die Fahrzeugbehandlungsanlage (100) ist bevorzugt dazu ausgebildet Positions- oder Bewegungsinformationen bestimmter Teile der Fahrzeugbehandlungsanlage über eine Schnittstelle zu übertragen.

Die übertragbaren Zustandsdaten der Fahrzeugbehandlungsanlage (100) können auch Informationen über den aktuellen Betriebszustand, z.B. das Waschprogramm, umfassen. Bevorzugt reagiert die Überwachungsvorrichtung (100) je nach Betriebszustand der Fahrzeugbehandlungsanlage (100) unterschiedlich auf erkannte Objekte im Erfassungsbereich.

Die Überwachungsvorrichtung (200) ist bevorzugt dazu ausgebildet Daten, insbesondere Bilddaten, vorverarbeitete Daten und/oder Zustandsdaten über eine Online-Schnittstelle (252) zu übertragen. Besonders vorteilhaft ist die Übertragung von Bilddaten als Stream. Die Übertragung von Bilddaten kann sowohl zur Verarbeitung der Bilddaten in einer entfernten Erkennungsvorrichtung (290) als auch zur Fernwartung genutzt werden.

### Bezugszeichenliste

- 100: Fahrzeugbehandlungsanlage
- 110: Gefahrenbereich, statisch
- 111: Gefahrenbereich, dynamisch
- 120: Anlagensteuerung
- 130: Marker
- 140: Behandlungsportal
- 150: Behandlungsmittel, Bürsten
- 200: Überwachungsvorrichtung
- 201: Kamera
- 210: Erfassungsbereich
- 220: Pfosten
- 240: Aufnahmen, Bilddaten
- 250: Bildverarbeitungseinheit
- 251: Anlagenschnittstelle
- 252: Online-Schnittstelle
- 253: Telekommunikationseinheit
- 255: (Auslöse-)Signal
- 260: Klassifikator
- 270: Situationsmodul
- 290: Entfernte Erkennungsvorrichtung
- FT: Fahrzeugtüre
- F: Fahrzeug
- P: Person
- O: Objekt
- H: Waschhalle

## Patentansprüche

1. Überwachungsvorrichtung (200) zur Begehungssicherung einer Fahrzeugbehandlungsanlage (100), insbesondere einer Fahrzeugwaschanlage, **dadurch gekennzeichnet, dass** die Überwachungsvorrichtung mindestens eine Kamera (201) und eine Bildverarbeitungseinheit (250) umfasst, wobei die Kamera (201) dazu ausgebildet ist, Aufnahmen von einem Erfassungsbereich (210) an und/oder in der Fahrzeugbehandlungsanlage (100) zu erzeugen, und wobei die Bildverarbeitungseinheit (250) dazu ausgebildet ist, Daten von mindestens einer Kamera zu empfangen und zu verarbeiten, und die Bildverarbeitungseinheit (250) eine Anlagenschnittstelle (251) umfasst, über die Daten mit der Fahrzeugbehandlungsanlage (100) austauschbar sind, wobei die Überwachungsvorrichtung (200) dazu ausgebildet ist, Personen im Erfassungsbereich (210) zu erkennen und auf Basis einer erkannten Person eine Sicherheitsaktion der Fahrzeugbehandlungsanlage (100) auszulösen.

2. Überwachungsvorrichtung nach Anspruch 1, wobei die Überwachungsvorrichtung (200) dazu ausgebildet ist, einen Not-Halt oder einen Sonderbetriebsmodus der Fahrzeugbehandlungsanlage (100) und/oder ein Warnsignal auszulösen.

3. Überwachungsvorrichtung nach Anspruch 1 oder 2, wobei die Überwachungsvorrichtung (200) dazu ausgebildet ist, Personen in einem Gefahrenbereich (110, 111) zu erkennen.

4. Überwachungsvorrichtung nach einem der vorhergehenden Ansprüche, wobei die Überwachungsvorrichtung (200) einen Klassifikator umfasst, der dazu ausgebildet ist, Objekte (O) in einer Aufnahme einer Kamera (201) nach Objektklassen zu klassifizieren.

5. Überwachungsvorrichtung nach einem der vorhergehenden Ansprüche, wobei die Überwachungsvorrichtung (200) dazu ausgebildet ist, Personen in einem Erfassungsbereich (210) zu lokalisieren und/oder zu tracken.

6. Überwachungsvorrichtung nach einem der vorhergehenden Ansprüche, wobei die Überwachungsvorrichtung (200) dazu ausgebildet ist, eine Sicherheitsaktion der Fahrzeugbehandlungsanlage (100) in Abhängigkeit der Position einer erkannten Person auszulösen.

7. Überwachungsvorrichtung nach einem der vorhergehenden Ansprüche, wobei die Überwachungsvorrichtung (200) dazu ausgebildet ist, einen statischen Gefahrenbereich (110) und/oder einen dynamischen Gefahrenbereich (111) an einer Fahrzeugbehandlungsanlage (100) zu ermitteln und/oder zu überwachen.

8. Überwachungsvorrichtung nach einem der vorhergehenden Ansprüche, wobei die Überwachungsvorrichtung (200) dazu ausgebildet ist, die Annäherung einer Person an einen Gefahrenbereich (110, 111) und/oder das Betreten einer Person in einen Gefahrenbereich (110, 111) zu erkennen.

9. Überwachungsvorrichtung nach einem der vorhergehenden Ansprüche, wobei die Überwachungsvorrichtung (200) dazu ausgebildet ist, Zustandsdaten einer Fahrzeugbehandlungsanlage (100) über die Anlagenschnittstelle (251) zu empfangen und/oder Zustandsdaten einer Fahrzeugbehandlungsanlage (100) zu verarbeiten.

10. Überwachungsvorrichtung nach einem der vorhergehenden Ansprüche, wobei die Überwachungsvorrichtung (200) eine Wärmebildkamera (201) umfasst.

11. Überwachungsvorrichtung nach einem der vorhergehenden Ansprüche, wobei die Überwachungsvorrichtung (200) eine Kamera (201) umfasst, die dazu ausgebildet ist, den Abstand zu einem Objekt zu ermitteln.

12. Überwachungsvorrichtung nach einem der vorhergehenden Ansprüche, wobei die Überwachungsvorrichtung (200) dazu ausgebildet ist, die Wiederaufnahme des Betriebs einer Fahrzeugbehandlungsanlage (100) auszulösen, insbesondere in Abhängigkeit der Position eines erkannten Objekts (O).

13. Fahrzeugbehandlungsanlage (100) mit einer Überwachungsvorrichtung (200) nach einem der vorhergehenden Ansprüche.

14. Fahrzeugbehandlungsanlage nach Anspruch 13, wobei mindestens eine Kamera (201) der Überwachungsvorrichtung (200) an einem Behandlungsportal (140) der Fahrzeugbehandlungsanlage (100) und/oder an einem Pfosten angeordnet ist.

15. Fahrzeugbehandlungsanlage nach Anspruch 13 oder 14, wobei mindestens eine Kamera (201) der Überwachungsvorrichtung (200) an einer Außenwand und/oder einer Decke einer Halle (H) der Fahrzeugbehandlungsanlage (100) angeordnet ist.

## Claims

1. Monitoring apparatus (200) for foot-entry protection in a vehicle treatment installation (100), in particular a vehicle washing installation, **characterized in that** the monitoring apparatus comprises at least one camera (201) and an image processing unit (250), the camera (201) being designed to produce recordings of a coverage area (210) on and/or in the vehicle treatment installation (100), and the image processing unit (250) being designed to receive and process data from at least one camera, and the image processing unit (250) comprises an installation interface (251) via which data are interchangeable with the vehicle treatment installation (100), wherein the monitoring apparatus (200) is designed to detect persons in the coverage area (210) and to take a detected person as a basis for initiating a safety action in the vehicle treatment installation (100).

2. Monitoring apparatus according to Claim 1, wherein the monitoring apparatus (200) is designed to initiate an emergency stop or a special operating mode in the vehicle treatment installation (100) and/or a warning signal.

3. Monitoring apparatus according to Claim 1 or 2, wherein the monitoring apparatus (200) is designed to detect persons in a danger zone (110, 111).

4. Monitoring apparatus according to one of the preceding claims, wherein the monitoring apparatus (200) comprises a classifier that is designed to classify objects (0) in a recording from a camera (201) according to object classes.

5. Monitoring apparatus according to one of the preceding claims, wherein the monitoring apparatus (200) is designed to locate and/or track persons in a coverage area (210).

6. Monitoring apparatus according to one of the preceding claims, wherein the monitoring apparatus (200) is designed to initiate a safety action in the vehicle treatment installation (100) on the basis of the position of a detected person.

7. Monitoring apparatus according to one of the preceding claims, wherein the monitoring apparatus (200) is designed to ascertain and/or monitor a static danger zone (110) and/or a dynamic danger zone (111) on a vehicle treatment installation (100).

8. Monitoring apparatus according to one of the preceding claims, wherein the monitoring apparatus (200) is designed to detect that a person is approaching a danger zone (110, 111) and/or that a person is entering a danger zone (110, 111).

9. Monitoring apparatus according to one of the preceding claims, wherein the monitoring apparatus (200) is designed to receive state data for a vehicle treatment installation (100) via the installation interface (251) and/or to process state data for a vehicle treatment installation (100).

10. Monitoring apparatus according to one of the preceding claims, wherein the monitoring apparatus (200) comprises a thermal imaging camera (201).

11. Monitoring apparatus according to one of the preceding claims, wherein the monitoring apparatus (200) comprises a camera (201) that is designed to ascertain the distance from an object.

12. Monitoring apparatus according to one of the preceding claims, wherein the monitoring apparatus (200) is designed to initiate the resumption of operation of a vehicle treatment installation (100), in particular on the basis of the position of a detected object (0).

13. Vehicle treatment installation (100) having a monitoring apparatus (200) according to one of the preceding claims.

14. Vehicle treatment installation according to Claim 13, wherein at least one camera (201) of the monitoring apparatus (200) is arranged on a treatment portal (140) of the vehicle treatment installation (100) and/or on a post.

15. Vehicle treatment installation according to Claim 13 or 14, wherein at least one camera (201) of the monitoring apparatus (200) is arranged on an external wall and/or a ceiling of a shed (H) of the vehicle treatment installation (100).

## Revendications

1. Dispositif de surveillance (200) permettant de sécuriser l'accès à une station de traitement de véhicule (100), en particulier d'une station de lavage de véhicule,
**caractérisé en ce que** le dispositif de surveillance comprend au moins une caméra (201) et une unité de traitement d'image (250), dans lequel la caméra (201) est réalisée pour produire des prises de vue d'une zone de détection (210) sur et/ou dans la station de traitement de véhicule (100), et dans lequel l'unité de traitement d'image (250) est réalisée pour recevoir et traiter des données d'au moins une caméra, et l'unité de traitement d'image (250) comprend une interface de station (251) par laquelle les données peuvent être échangées avec la station de traitement de véhicule (100), dans lequel le dispositif de surveillance (200) est réalisé pour identifier des personnes dans la zone de détection (210) et pour déclencher sur la base d'une personne identifiée une action de sécurité de la station de traitement de véhicule (100).

2. Dispositif de surveillance selon la revendication 1, dans lequel le dispositif de surveillance (200) est réalisé pour déclencher un arrêt d'urgence ou un mode de fonctionnement spécial de la station de traitement de véhicule (100) et/ou un signal d'alarme.

3. Dispositif de surveillance selon la revendication 1 ou 2, dans lequel le dispositif de surveillance (200) est réalisé pour identifier des personnes dans une zone à risque (110, 111).

4. Dispositif de surveillance selon l'une quelconque des revendications précédentes, dans lequel le dispositif de surveillance (200) comprend un classificateur qui est réalisé pour classifier des objets (O) sur une prise de vue d'une caméra (201) selon des classes d'objet.

5. Dispositif de surveillance selon l'une quelconque des revendications précédentes, dans lequel le dispositif de surveillance (200) est réalisé pour localiser et/ou suivre des personnes dans une zone de détection (210).

6. Dispositif de surveillance selon l'une quelconque des revendications précédentes, dans lequel le dispositif de surveillance (200) est réalisé pour déclencher une action de sécurité de la station de traitement de véhicule (100) en fonction de la position d'une personne identifiée.

7. Dispositif de surveillance selon l'une quelconque des revendications précédentes, dans lequel le dispositif de surveillance (200) est réalisé pour déterminer et/ou surveiller une zone à risque statique (110) et/ou une zone à risque dynamique (111) au niveau d'une station de traitement de véhicule (100).

8. Dispositif de surveillance selon l'une quelconque des revendications précédentes, dans lequel le dispositif de surveillance (200) est réalisé pour identifier l'approche d'une personne d'une zone à risque (110, 111) et/ou l'entrée d'une personne dans une zone à risque (110, 111).

9. Dispositif de surveillance selon l'une quelconque des revendications précédentes, dans lequel le dispositif de surveillance (200) est réalisé pour recevoir des données d'état d'une station de traitement de véhicule (100) par l'intermédiaire d'une interface de station (251) et/ou pour traiter des données d'état d'une station de traitement de véhicule (100).

10. Dispositif de surveillance selon l'une quelconque des revendications précédentes, dans lequel le dispositif de surveillance (200) comprend une caméra thermique (201).

11. Dispositif de surveillance selon l'une quelconque des revendications précédentes, dans lequel le dispositif de surveillance (200) comprend une caméra (201) qui est réalisée pour déterminer la distance par rapport à un objet.

12. Dispositif de surveillance selon l'une quelconque des revendications précédentes, dans lequel le dispositif de surveillance (200) est réalisé pour déclencher la reprise du fonctionnement d'une station de traitement de véhicule (100), en particulier en fonction de la position d'un objet (O) identifié.

13. Station de traitement de véhicule (100), comprenant un dispositif de surveillance (200) selon l'une quelconque des revendications précédentes.

14. Station de traitement de véhicule selon la revendication 13, dans laquelle au moins une caméra (201) du dispositif de surveillance (200) est disposée sur un portique de traitement (140) de la station de traitement de véhicule (100) et/ou sur un poteau.

15. Station de traitement de véhicule selon la revendication 13 ou 14, dans laquelle au moins une caméra (201) du dispositif de surveillance (200) est disposée sur un mur extérieur et/ou un plafond d'un hangar (H) de la station de traitement de véhicule (100) .
